(19) **Europäisches Patentamt / European Patent Office / Office européen des brevets**

(11) **EP 4 697 696 A1**

(12) **EUROPEAN PATENT APPLICATION**
published in accordance with Art. 153(4) EPC

(43) Date of publication:
**18.02.2026  Bulletin 2026/08**

(21) Application number: **24788411.7**

(22) Date of filing: **14.02.2024**

(51) International Patent Classification (IPC):
**H04N 5/21** (2006.01)    **G06T 5/70** (2024.01)
**H04N 23/60** (2023.01)

(52) Cooperative Patent Classification (CPC):
**G06T 5/70; H04N 5/21; H04N 23/60**

(86) International application number:
**PCT/JP2024/004990**

(87) International publication number:
**WO 2024/214381 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **12.04.2023  JP 2023064705**

(71) Applicant: **KONICA MINOLTA, INC.
Tokyo 100-7015 (JP)**

(72) Inventor: **ASANO Motohiro
Tokyo 100-7015 (JP)**

(74) Representative: **MFG Patentanwälte
Meyer-Wildhagen Meggle-Freund
Gerhard PartG mbB
Amalienstraße 62
80799 München (DE)**

(54) **IMAGE PROCESSING DEVICE, IMAGE PROCESSING METHOD, AND PROGRAM**

(57)    The objective of the present invention is to improve image quality while avoiding side effects caused by removal of time noise. The image processing device processes each of a plurality of frames constituting a time-series image, as a target frame. The image processing device performs time noise removal processing for each pixel on the basis of the target frame and a frame previous to the target frame, and generates an image (first processed image) after the time noise removal processing of the target frame. The image processing device performs spatial noise removal processing with respect to the target frame, and generates an image (second processed image) after the spatial noise removal processing of the target frame. For each pixel of the target frame, if an absolute value of a difference between a pixel value of the image after the time noise removal processing and a pixel value of the image after the spatial noise removal processing is equal to or less than a predetermined value, the image processing device outputs the pixel value of the image after the time noise removal processing, and if the absolute value of the difference is larger than the predetermined value, the image processing device outputs the pixel value of the target frame.

FIG.11

**Description**

Technical Field

The present invention relates to an image processing apparatus, an image processing method, and a program.

Background Art

Conventionally, time-series images (moving images) obtained by continuous imaging have been widely used. When an image is captured under extremely low illuminance, much noise may appear on the image.
To reduce noise, for example, a proposed video processing apparatus estimates motions between an interest frame and its preceding and following frames among multiple frames constituting a moving image (see Patent Literature 1). This apparatus detects pixel-by-pixel motion vectors from consecutive frames in time to determine the boundary between foreground objects and the background and reduces noise.

Citation List

Patent Literature

Patent Document 1: Japanese Unexamined Patent Publication No. 2014-158083

Summary of Invention

Technical problem

When temporal noise is removed by averaging 30 to 40 frames to improve the image quality, although the image quality of a region with no motion (for example, the background) is improved, a side effect (e.g., an afterimage) occurs at a moving part.
The present invention has been made in view of the above-described challenge in the related art. An object of the present invention is to improve image quality while avoiding side effects owing to removal of temporal noise.

Solution to Problem

In order to solve the above-described problem, the invention described in claim 1 is an image processing apparatus that performs processing on each of frames constituting a time-series image as a target frame, the apparatus including: a first processor that performs a temporal noise removal process on each pixel, based on the target frame and a past frame obtained earlier than the target frame to generate a first processed image of the target frame; a second processor that performs a spatial noise removal process on the target frame to generate a second processed image of the target frame; and an output value determination section, wherein: for each pixel of the target frame, when an absolute value of a difference between a pixel value of the first processed image and a pixel value of the second processed image is less than or equal to a predetermined value, the output value determination section outputs the pixel value of the first processed image, and when the absolute value of the difference is greater than the predetermined value, the output value determination section outputs a pixel value of the target frame.
The invention described in claim 2 is the image processing apparatus according to claim 1, wherein in the temporal noise removal process of the target frame, the first processor uses the first processed image generated for a frame immediately before the target frame.
The invention described in claim 3 is the image processing apparatus according to claim 1, wherein the first processor calculates an average of the target frame and a predetermined number of past frames obtained earlier than the target frame.
The invention described in claim 4 is the image processing apparatus according to claim 1, wherein, for each pixel of the target frame, the second processor calculates an average of the pixel and surrounding pixels of the pixel.
The invention described in claim 5 is the image processing apparatus according to claim 4, wherein: the second processor includes a line memory that stores pixel values of a predetermined number of lines in the target frame, and a range of the surrounding pixels in a direction parallel to the line is greater than a range of the surrounding pixels in a direction perpendicular to the line.
The invention described in claim 6 is the image processing apparatus according to claim 1, wherein: the time-series image is a Bayer image, and for each pixel of the target frame, the second processor calculates an average of the pixel and surrounding pixels having an identical color as the pixel.

The invention described in claim 7 is the image processing apparatus according to any one of claims 1 to 6, wherein pixel values of the time-series image are density values indicating image density.

The invention described in claim 8 is the image processing apparatus according to any one of claims 1 to 6, wherein pixel values of the time-series image are numerical values indicating distances.

The invention described in claim 9 is an image processing method for performing processing on each of frames constituting a time-series image as a target frame, the method including: a first processing step of performing a temporal noise removal process on each pixel, based on the target frame and a past frame obtained earlier than the target frame to generate a first processed image of the target frame; a second processing step of performing a spatial noise removal process on the target frame to generate a second processed image of the target frame; and an output value determination step, wherein: in the output value determination step, for each pixel of the target frame, when an absolute value of a difference between a pixel value of the first processed image and a pixel value of the second processed image is less than or equal to a predetermined value, the pixel value of the first processed image is output, and when the absolute value of the difference is greater than the predetermined value, a pixel value of the target frame is output.

The invention described in claim 10 is a program for a computer of an image processing apparatus that performs processing on each of frames constituting a time-series image as a target frame, the program causing the computer to function as: a first processor that performs a temporal noise removal process on each pixel, based on the target frame and a past frame obtained earlier than the target frame to generate a first processed image of the target frame; a second processor that performs a spatial noise removal process on the target frame to generate a second processed image of the target frame; and an output value determination section, wherein: for each pixel of the target frame, when an absolute value of a difference between a pixel value of the first processed image and a pixel value of the second processed image is less than or equal to a predetermined value, the output value determination section outputs the pixel value of the first processed image, and when the absolute value of the difference is greater than the predetermined value, the output value determination section outputs a pixel value of the target frame.

Advantageous Effects of Invention

According to the present invention, it is possible to improve image quality while avoiding side effects due to removal of temporal noise.

Brief Description of Drawings

[FIG. 1] This is a block diagram illustrating a configuration of an image processing system according to an embodiment of the present invention.

[FIG. 2] This is a flowchart illustrating an image processing executed by an image processing apparatus.

[FIG. 3] This is a graph illustrating a function param (diff) used for a temporal noise removal process.

[FIG. 4] This is a diagram illustrating the result of the temporal noise removal process on time-series image data without motion.

[FIG. 5A] This is a diagram indicating a target pixel.

[FIG. 5B] This is a graph illustrating temporal changes of input pixel values of the target pixel and output pixel values after the temporal noise removal process.

[FIG. 5C] This is a diagram showing standard deviations of input pixel values of the target pixel and output pixel values after the temporal noise removal process.

[FIG. 6] This is a diagram illustrating the result of the temporal noise removal process on time-series image data with motions.

[FIG. 7] This is an example of a spatial filter used in a spatial noise removal process.

[FIG. 8] This is a diagram illustrating the result of the spatial noise removal process performed on time-series image data without motion.

[FIG. 9A] This is a diagram illustrating a target pixel.

[FIG. 9B] This is a graph illustrating temporal changes of input pixel values of the target pixel and output pixel values after the spatial noise removal process.

[FIG. 9C] This is a diagram showing standard deviations of input pixel values of the target pixel and output pixel values after the spatial noise removal process.

[FIG. 10] This is a diagram illustrating the result of the spatial noise removal process on time-series image data with motion.

[FIG. 11] This is a flowchart illustrating an output value determination process.

[FIG. 12] This is a diagram illustrating images after the temporal noise removal process is performed on time-series image data without motion and output images.

[FIG. 13A] This is a diagram illustrating a target pixel.

[FIG. 13B] This is a graph showing changes in the input pixel value and output pixel value of the target pixel over time.

[FIG. 13C] This is a diagram showing standard deviations of the input pixel values and the output pixel values of the target pixel.

[FIG. 14] This is a diagram illustrating images after the temporal noise removal process is performed on time-series image data with motion and output images.

[FIG. 15A] This is a diagram illustrating a target pixel in the temporal noise removal process of a modification example 1.

[FIG. 15B] This is a graph showing temporal changes of the input pixel value of the target pixel, the mean value in past 30 frames, and the mean value in past 40 frames.

[FIG. 15C] This is a diagram illustrating standard deviations of the input pixel value of the target pixel, the mean value in past 30 frames, and the mean value in past 40 frames.

[FIG. 16] This is a graph showing a function param (diff) used in the temporal noise removal process of a modification example 2.

[FIG. 17] This is an example of a spatial filter used in the spatial noise removal process of a modification example 3.

[FIG. 18A] This is an example of a Bayer layout in a modification example 4.

[FIG. 18B] This is an example of a spatial filter for a Bayer image.

[FIG. 19] This is a diagram of an input image and an output image displayed in the form of a Bayer image when time-series image data without motion is a target.

[FIG. 20] This is a diagram of an input image and an output image displayed in the form of a Bayer image when time-series image data with motions is a target.

[FIG. 21] This is a diagram of an input image and an output image displayed in colors when time-series image data without motions is a target.

[FIG. 22] This is a diagram of an input image and an output image displayed in colors when time-series image data with motions is a target.

Description of Embodiments

Hereinafter, embodiments of the present invention will be described with reference to the drawings. However, the scope of the present invention is not limited to the following embodiment and illustrated examples.

[Configuration of Image Processing System]

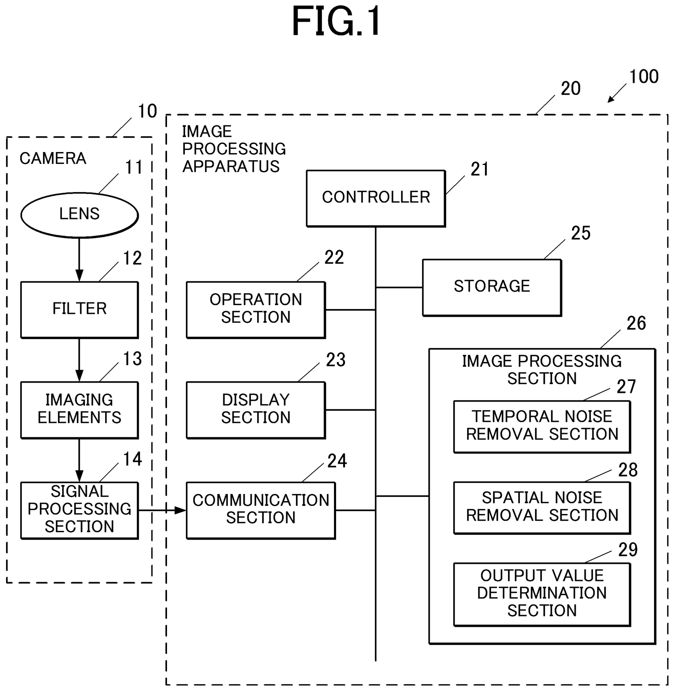

FIG. 1 is a block diagram illustrating a configuration of an image processing system 100.

The image processing system 100 includes a camera 10 and an image processing apparatus 20. The image processing apparatus 20 may include the camera 10.

The camera 10 captures a subject continuously over time and generates a time-series image. The time-series image consists of a plurality of frames.

The camera 10 includes a lens 11, filters 12, an imaging element 13, and a signal processing section 14.

The lens 11 forms an image of a subject on the imaging element 13.

The filters 12 are primary color filters corresponding to R (red), G (green), and B (blue), respectively. The filters 12 transmit light having specific wavelengths corresponding to R, G, and B out of light having passed through the lens 11.

The imaging element 13 is a two-dimensional image sensor. The imaging element 13 receives light having passed through the filters 12 and outputs a signal corresponding to the intensity of the received light.

The signal processing section 14 converts an analog signal output by the imaging element 13 into a digital signal and performs known signal processing on the converted digital signal.

The image processing apparatus 20 processes each of the frames constituting the time-series image as a target frame. Pixel values of the time-series image are density values (luminance values) indicating image density. The image processing apparatus 20 is a computer, a portable device, a smartphone, a tablet, or the like.

The image processing apparatus 20 includes a controller 21, an operation section 22, a display section 23, a communication section 24, a storage 25, and an image processing section 26.

The controller 21 includes a central processing unit (CPU) and a random access memory (RAM). The CPU reads various programs stored in the storage 25, loads the programs in the RAM, executes various processes in accordance with the loaded programs, and centrally controls operations of each component of the image processing apparatus 20.

The operation section 22 receives manipulation by a user and outputs control signals corresponding to the manipulation to the controller 21. The operation section 22 includes a keyboard, a pointing device, and a touch screen. The keyboard includes cursor keys, character/number input keys, and various function keys. The pointing device is a mouse, for example. The touch screen is laid on the surface of the display section 23 and detects coordinates of the position touched by the user.

The display section 23 is a liquid crystal display (LCD), an organic EL display, or the like. The display section 23 displays a screen corresponding to image signals output by the controller 21, for example.

The communication section 24 is a communication interface that communicates with the camera 10. The communication section 24 receives image data of a time-series image from the camera 10.

The storage 25 includes a non-volatile memory, a hard disk, or the like. The storage 25 stores various programs to be executed by the CPU of the controller 21, parameters necessary for the execution of the programs, and so forth.

The image processing section 26 performs image processing on image data of a time-series image acquired from the camera 10. The image processing section 26 includes a temporal noise removal section 27, a spatial noise removal section 28, and an output value determination section 29. The CPU of the controller 21 functions as the temporal noise removal section 27, the spatial noise removal section 28, and the output value determination section 29 by executing programs corresponding to the respective sections. Some or all of the functions of the temporal noise removal section 27, the spatial noise removal section 28, and the output value determination section 29 may be performed by processing performed by a hardware circuit, such as a field programmable gate array (FPGA).

The temporal noise removal section 27 (first processor) performs a temporal noise removal process for each pixel, based on the target frame and a frame(s) obtained before the target frame, and generates an image after the temporal noise removal process (first processed image) of the target frame. In the temporal noise removal process, noise is removed from an input image by smoothing pixel values of the time-series image in the time direction.

For example, in the temporal noise removal process of the target frame, the temporal noise removal section 27 uses the image after the temporal noise removal process generated for the frame immediately before the target frame.

The spatial noise removal section 28 (second processor) performs the spatial noise removal process on the target frame to generate an image after the spatial noise removal process (second processed image) of the target frame. In the spatial noise removal process, noise is removed from an input image by smoothing pixel values within an identical frame of the time-series image.

For example, in the spatial noise removal process, an average of a pixel and its surrounding pixels is obtained for each pixel in the target frame. The range of the surrounding pixels can be appropriately changed according to the spatial filter to be used in the spatial noise removal process. The spatial noise removal section 28 may adjust weighting of each pixel to obtain the average (weighted average).

The output value determination section 29 calculates, for each pixel of the target frame, an absolute difference between a pixel value of the image after the temporal noise removal process (first processed image) and a pixel value in the image after the spatial noise removal process (second processed image). When the absolute difference is equal to or less than a predetermined value, the output value determination section 29 outputs the pixel value of the image after the temporal noise removal process. When the absolute difference is greater than the predetermined value, the output value determination section 29 outputs the pixel value of the target frame.

[Operation of Image Processing Apparatus]

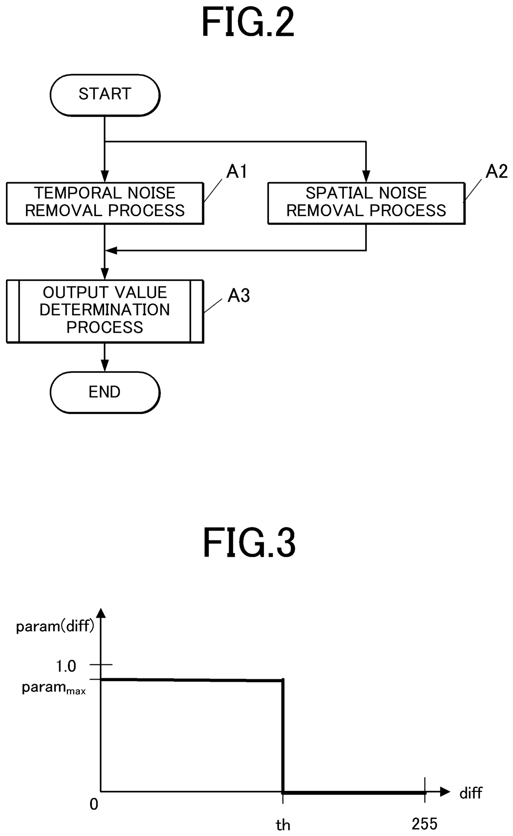

FIG. 2 is a flowchart illustrating image processing to be executed by the image processing apparatus 20. This process is performed for each frame constituting the time-series image as the target frame.

In the present embodiment, both the input pixel values and output pixel values in the image process are 12-bit lengths (0 to 4095). The frame rate is 30 fps.

First, the temporal noise removal section 27 performs the temporal noise removal process on the target frame (step A1). The temporal noise removal section 27 performs the following process for each pixel in the image.

An input pixel value of the current frame (target frame) is defined as $I_n$.

An output pixel value of the current frame after the temporal noise removal process is defined as $T_n$. An output pixel value of the frame immediately before the current frame after the temporal noise removal process is defined as $T_{n-1}$. The temporal noise removal section 27 retains the output pixel value $T_{n-1}$ of the frame immediately before the current frame after the temporal noise removal process on the memory. The memory may be provided in the temporal noise removal section 27 or in the storage 25.

As in Expression (1), "diff" is a value obtained by shifting the absolute difference between the input pixel value $I_n$ of the current frame and the output pixel value $T_{n-1}$ of the immediately preceding frame after the temporal noise removal process to the right by 4 bits. The value of "diff" can be in the range of 0 to 255.

[Expression 1]

$$\mathrm{diff} = \mathrm{abs}\,(\,I_n - T_{n-1}\,) \gg 4 \qquad \cdots \text{EXPRESSION (1)}$$

The bit shift is a process for changing the range (width) that "diff" can take. Even after the bit shift, "diff" still indicates the magnitude of the absolute difference between the input pixel value $I_n$ of the current frame and the output pixel

value $T_{n-1}$ of the immediately previous frame after the temporal noise removal process.

FIG. 3 shows a function of diff (param (diff)). The param (diff) is $param_{max}$ when diff is less than or equal to a threshold "th". The param (diff) is zero when diff is greater than the threshold "th". For example, they are set as follows: th = 140, $param_{max}$ = 0.95.

The output pixel value $T_n$ of the current frame after the temporal noise removal process is obtained by Expression (2).

[Expression 2]

$$T_n = I_n \times \{1.0 - \mathrm{param\,(diff\,)}\} + T_{n-1} \times \mathrm{param\,(diff\,)} \quad \cdots \text{EXPRESSION (2)}$$

The temporal noise removal section 27 performs weighted addition of the output pixel value $T_{n-1}$ of the immediately preceding frame after the temporal noise removal process and the input pixel value $I_n$ of the current frame, and outputs the output pixel value $T_n$ of the current frame after the temporal noise removal process. The param(diff) corresponds to weighting to a past frame in the temporal noise removal process.

As shown in FIG. 3, when diff is equal to or less than threshold, param (diff) is $param_{max}$. The closer the $param_{max}$ is to 1, the greater the weighting on the past output is. The $param_{max}$ close to 1 can yield the same effect as averaging frames of a long period.

On the other hand, the diff greater than the threshold corresponds to a case where a large luminance change occurs owing to the influence of a moving object, for example. In this case, the input pixel value $I_n$ of the current frame is output as it is to avoid unnecessary afterimages.

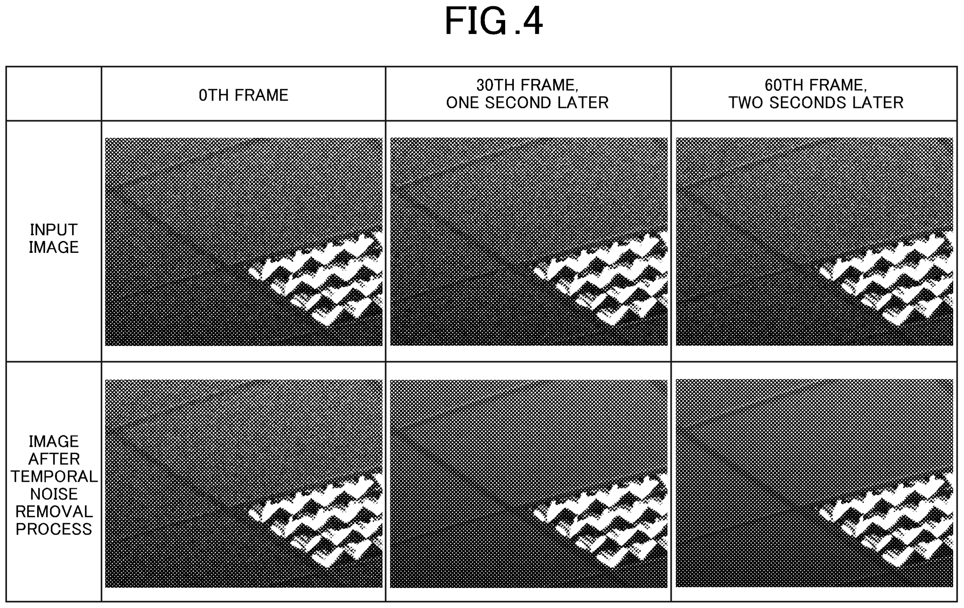

FIG. 4 shows the result of the temporal noise removal process performed on time-series image data without motion. The time-series image data without motion does not include a moving body as a subject. FIG. 4 shows the 0th frame, the 30th frame, and the 60th frame of the input images, and the image after the temporal noise removal process is performed on the respective input images. As shown in FIG. 4, noise is removed from the 30th frame and the 60th frame by the temporal noise removal process.

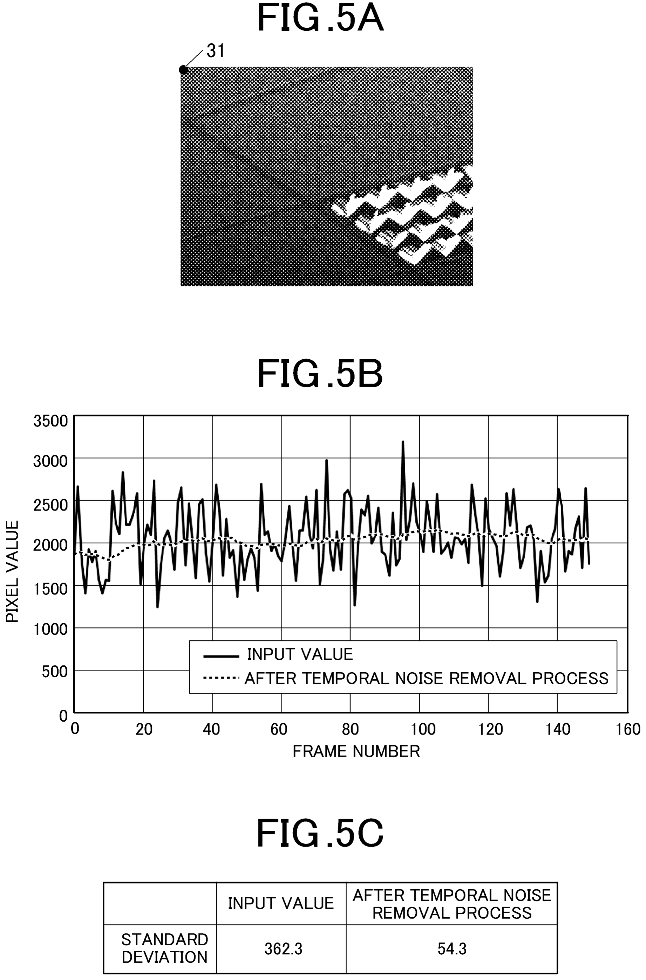

The upper left pixel is determined to be a target pixel 31 in each frame image of the time-series image data without motion, as shown in FIG. 5A.

FIG. 5B shows temporal changes in the input pixel value $I_n$ and the output pixel value $T_n$ after the temporal noise removal process of the target pixel 31. In FIG. 5B, the horizontal axis represents frame numbers, and the vertical axis represents pixel values. The frame numbers correspond to the passage of time.

FIG. 5C shows the standard deviation of the input pixel value $I_n$ in the 50th to 149th frames shown in FIG. 5B and the standard deviation of the output pixel value $T_n$ after the temporal noise removal process. The noise level (variation in pixel values) can be determined by obtaining the standard deviation among frames in which pixel values are stabilized to some extent (herein, 50th to 149th frames). By the temporal noise removal process (see Expressions (1), (2) and FIG. 3), the standard deviation of the pixel value is changed from "362.3" before the process to "54.3" after the process. This shows that the noise level is improved by the temporal noise removal process.

However, a problem occurs when the temporal noise removal process is performed on an image with motion.

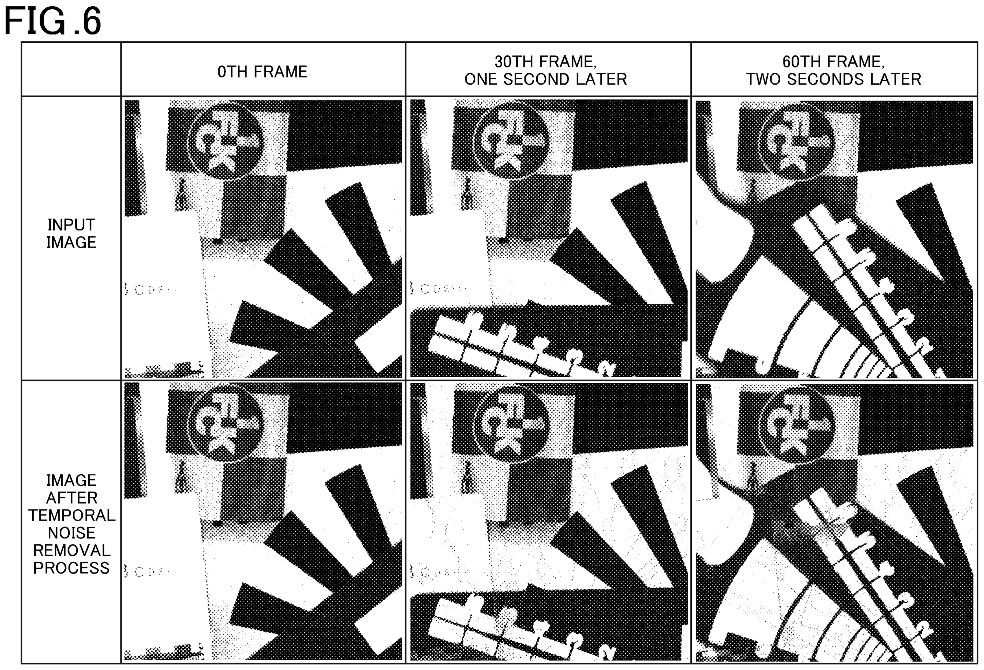

FIG. 6 shows the result of the temporal noise removal process on time-series image data with motion. The time-series image data with motion includes a moving body as a subject. FIG. 6 shows the 0th frame, the 30th frame, and the 60th frame of the input images, and the images after the temporal noise removal process is performed on the respective input images. As shown in FIG. 6, an afterimage appears in the 30th and 60th frames owing to the temporal noise removal process.

In the image processing shown in FIG. 2, the spatial noise removal section 28 performs the spatial noise removal process on the target frame (step A2) in parallel with the temporal noise removal process (step A1). The spatial noise removal section 28 averages the pixel value of the target pixel and the surrounding pixels of the target pixel to create an image from which noise is removed.

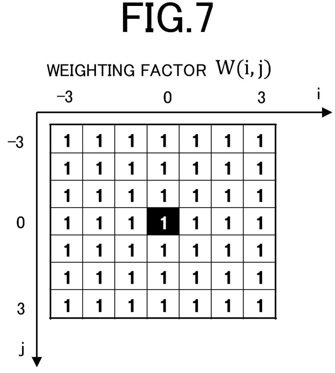

FIG. 7 illustrates an example of a spatial filter. A weighting factor at each position in the filter is denoted by $W (i, j)$.

An input pixel value at a pixel position $(x, y)$ in the current frame (target frame) is defined as $I_n (x, y)$.

The output pixel value $S_n (x, y)$ at the pixel position $(x, y)$ after the spatial noise removal process is obtained by Expression (3). Herein, 49 ($7 \times 7$) pixel values are averaged.

[Expression 3]

$$S_n(x, y) = \left\{ \sum_{i=-3}^{3} \sum_{j=-3}^{3} W(i, j) I_n (x + i, y + j) \right\} / 49 \quad \cdots \text{EXPRESSION (3)}$$

Hereinafter, the output pixel value $S_n$ (x, y) after the spatial noise removal process may be simply referred to as $S_n$ by omitting the pixel position (x, y).

Similarly, the input pixel value $I_n$ (x, y) may be simply referred to as $I_n$ by omitting the pixel position (x, y).

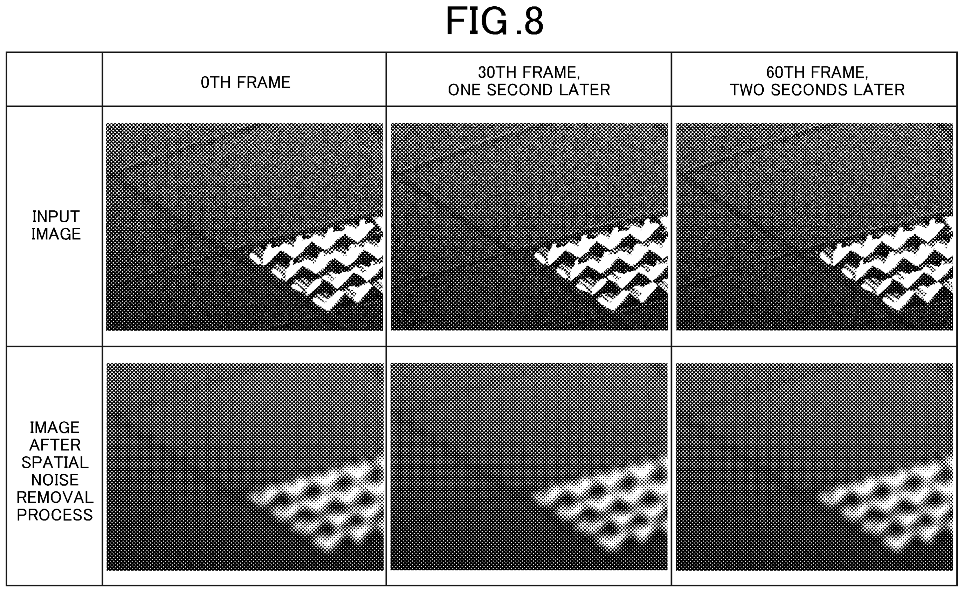

FIG. 8 shows the result of the spatial noise removal process performed on the time-series image data without motion. FIG. 8 shows the 0th frame, the 30th frame, and the 60th frame of the input images, and images after the spatial noise removal process is performed on the respective input images.

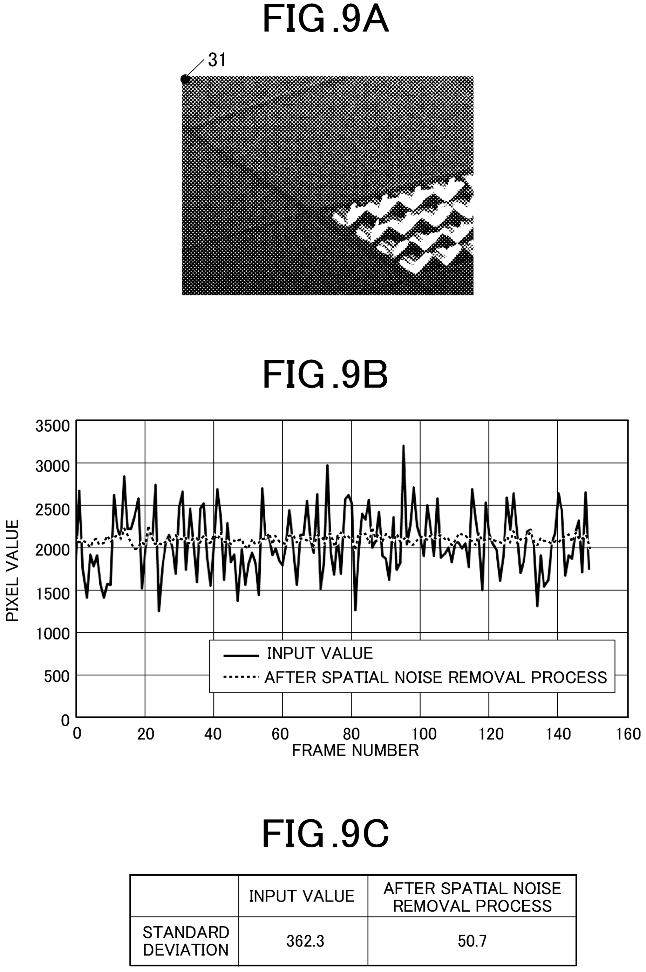

The upper left pixel is determined to be a target pixel 31 in each frame image of the time-series image data without motion, as shown in FIG. 9A.

FIG. 9B shows temporal changes in the input pixel value $I_n$ and the output pixel value $S_n$ after the spatial noise removal process of the target pixel 31. In FIG. 9B, the horizontal axis represents frame numbers and the vertical axis represents pixel values.

FIG. 9C shows the standard deviation of the input pixel values $I_n$ in the 50th to 149th frames and the standard deviation of the output pixel values $S_n$ after the spatial noise removal process shown in FIG. 9B. By the spatial noise removal process (see Expression (3) and FIG. 7), the standard deviation of the pixel value is changed from "362.3" before the process to "50.7" after the process. This shows that the noise level (standard deviation) in the image after the spatial noise removal process is improved to the same extent as in the image after the temporal noise removal process (see FIG. 5C).

In the next step, the output value determination section 29 compares the result of processing with the temporal filter and the result of processing with the spatial filter. Therefore, it is desirable that the spatial filter used for the spatial noise removal process improves the image noise as well as or better than the temporal filter. Increasing the size of the spatial filter and increasing the number of pixels used for smoothing can further reduce noise.

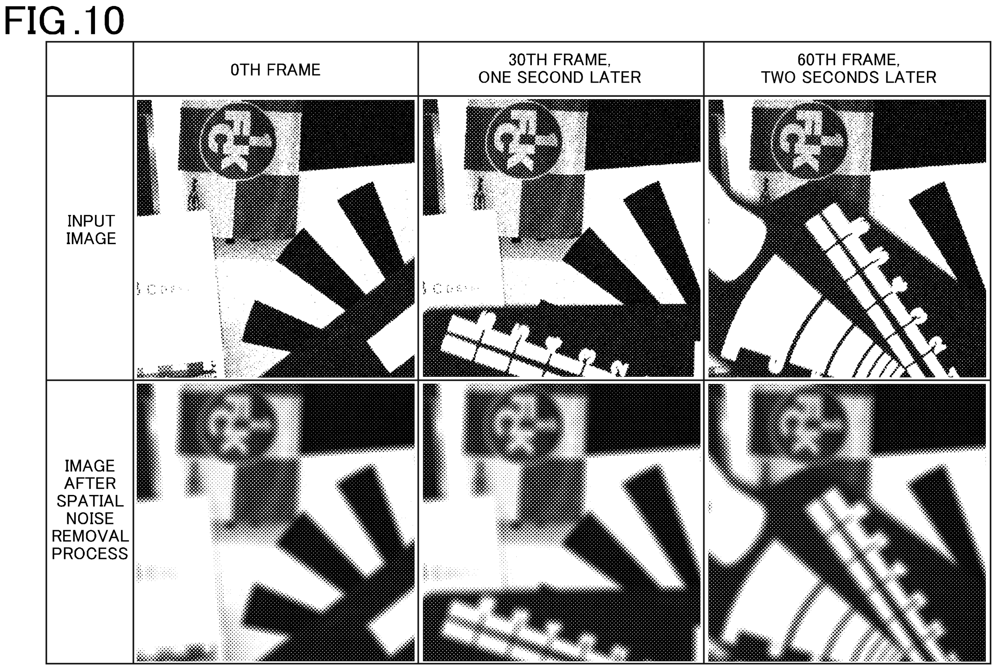

FIG. 10 shows the result of the spatial noise removal process performed on time-series image data with motion. FIG. 10 shows the 0th frame, the 30th frame, and the 60th frame in the input images, and images after the spatial noise removal process is performed on the respective input images.

As shown in FIG. 8 and FIG. 10, the spatial noise removal process reduces noise but blurs edge portions. The image after the spatial noise removal process is used only for determining whether the image after the temporal noise removal process has an afterimage. Therefore, the image after the spatial noise removal process does not affect image quality.

After steps A1 and A2 in the image processing shown in FIG. 2, the output value determination section 29 performs an output value determination process for the target frame (step A3). The output value determination section 29 determines output values of the target frame, based on the image after the temporal noise removal process of the target frame and the image after the spatial noise removal process of the target frame.

By comparison between the image after the temporal noise removal process in FIG. 4 and the image after the spatial noise removal process in FIG. 8, the following can be understood. If an area is supposed to have substantially uniform pixel values provided that no motion or noise occurs, the area has substantially the same pixel values in the image after the temporal noise removal process and in the image after the spatial noise removal process.

Therefore, the difference between the pixel value in the image after the temporal noise removal process and the pixel value in the image after the spatial noise removal process is used as a criterion for determining whether a side effect occurs owing to the removal of temporal noise.

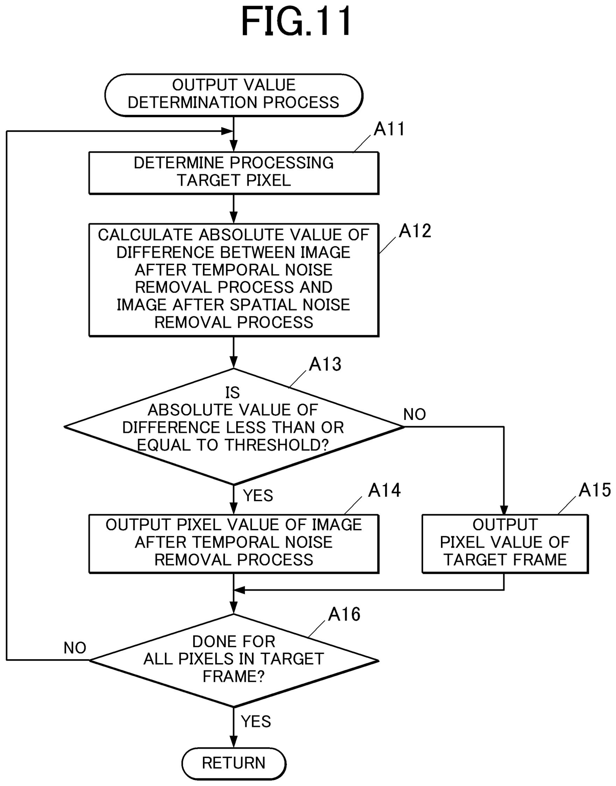

Herein, the output value determination process will be described with reference to FIG. 11.

First, the output value determination section 29 determines a processing target pixel in the target frame (step A11).

Next, for the processing target pixel, the output value determination section 29 calculates the absolute difference between the image after the temporal noise removal process and the image after the spatial noise removal process (step A12).

As shown in Expression (4), the output value determination section 29 determines, as diff2, a value obtained by shifting the absolute difference between the output pixel value $T_n$ after the temporal noise removal process and the output pixel value $S_n$ after the spatial noise removal process to the right by 4 bits. The value of diff2 can be in the range of 0 to 255.

[Expression 4]

$$\mathrm{diff2} = \mathrm{abs}\,(\,T_n - S_n\,) \gg 4 \qquad \cdots \mathrm{EXPRESSION}\ (4)$$

The bit shift is a process for changing the range (width) that "diff2" can take. Even after the bit shift, "diff2" still indicates the magnitude of the absolute difference between the output pixel value $T_n$ after the temporal noise removal process and the output pixel value $S_n$ after the spatial noise removal process.

Next, the output value determination section 29 determines, for the processing target pixel, whether diff2 is less than or equal to the threshold th2 (step A13).

The input pixel value of the target frame is defined as $I_n$, and the output pixel value of the target frame is defined as $O_n$. The output pixel value $O_n$ is obtained by Expression (5). For example, th2 is set to 12.

[Expression 5]

$$O_n = T_n \qquad \text{if} \quad \text{diff2} \leqq \text{th2}$$
$$\qquad\qquad\qquad\qquad\qquad\qquad \cdots \text{EXPRESSION (5)}$$
$$O_n = I_n \qquad \text{if} \quad \text{diff2} > \text{th2}$$

Specifically, if diff2 of the processing target pixel is equal to or less than the threshold th2 (step A13: YES), the output value determination section 29 sets the output pixel value $T_n$ after the temporal noise removal process to the output pixel value $O_n$. That is, the output value determination section 29 outputs the pixel value of the image after the temporal noise removal process (step A14). Thus, temporal noise is removed.

For the processing target pixel, if diff2 is greater than the threshold th2 (step A13: NO), the output value determination section 29 sets the input pixel value $I_n$ to the output pixel value $O_n$. That is, the output value determination section 29 outputs the pixel value of the processing target pixel in the target frame as it is (step A15). If diff2 is greater than threshold th2, the output value determination section 29 determines that the image after the temporal noise removal process has an afterimage and outputs the input pixel value $I_n$ as it is to avoid producing an afterimage.

After step A14 or step A15, the output value determination section 29 determines whether the process has been completed for all the pixels in the target frame (step A16).

When there is a pixel for which the process has not been completed in the target frame (step A16; NO), the process returns to step A11. The output value determination section 29 repeats the process with other pixels as the processing target.

In step A16, when the process has been completed for all the pixels in the target frame (step A16; YES), the output value determination process ends.

Returning to FIG. 2, the image processing ends. The image processing is performed for each frame, and thus the processing on the time-series image progresses.

The controller 21 causes the display section 23 to display the image subjected to the image processing. For example, the controller 21 causes the display section 23 to display the time-series image subjected to the image processing as a moving image. Furthermore, the controller 21 may display the time-series image on which the image processing has been performed on the display section 23 on a frame-by-frame basis.

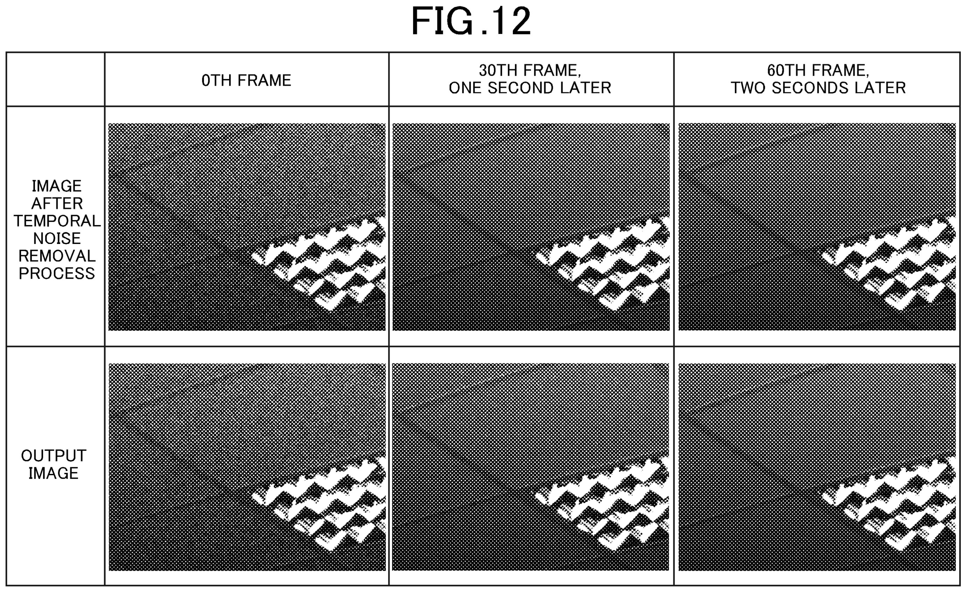

FIG. 12 illustrates images after the temporal noise removal process is performed on time-series image data without motion and output images that are finally output. The output image is an image in which either the pixel value of the image after the temporal noise removal process or the input pixel value of the target frame has been selected for each pixel in the output value determination process.

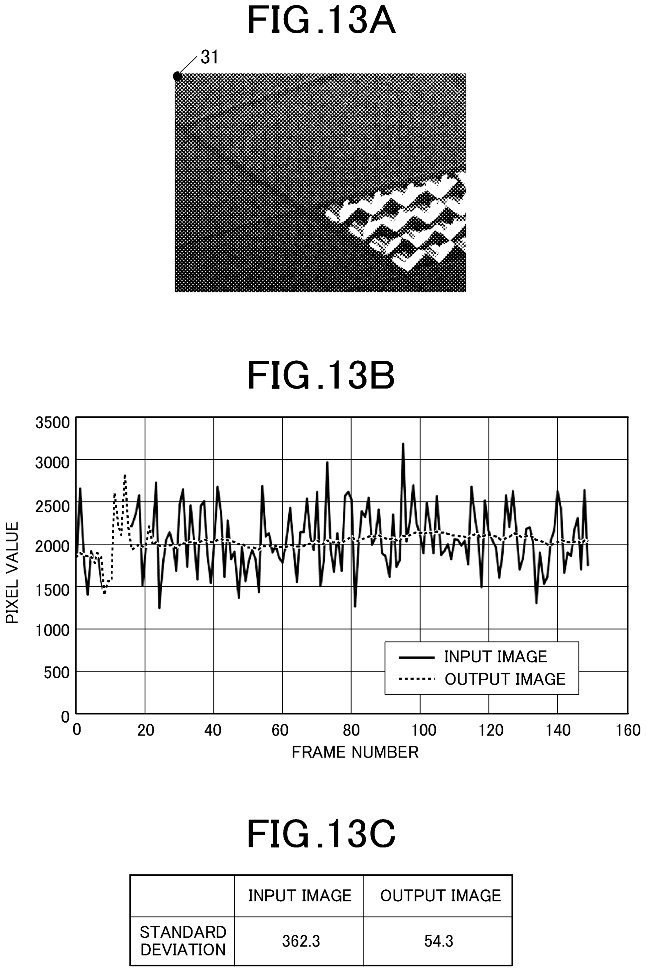

The upper left pixel is determined to be a target pixel 31 in each frame image of the time-series image data without motion, as shown in FIG. 13A.

FIG. 13B shows temporal changes in the input pixel value $I_n$ and the output pixel value $O_n$ that is finally output by the image processing for the target pixel 31. In FIG. 13B, the horizontal axis represents frame numbers and the vertical axis represents pixel values.

FIG. 13C shows the standard deviation of the input pixel values $I_n$ in the 50th to 149th frames and the standard deviation of the output pixel values $O_n$ shown in FIG. 13B. By the image processing, the standard deviation of the pixel values is changed from "362.3" before the processing to "54.3" after the processing. This shows that the noise level is improved.

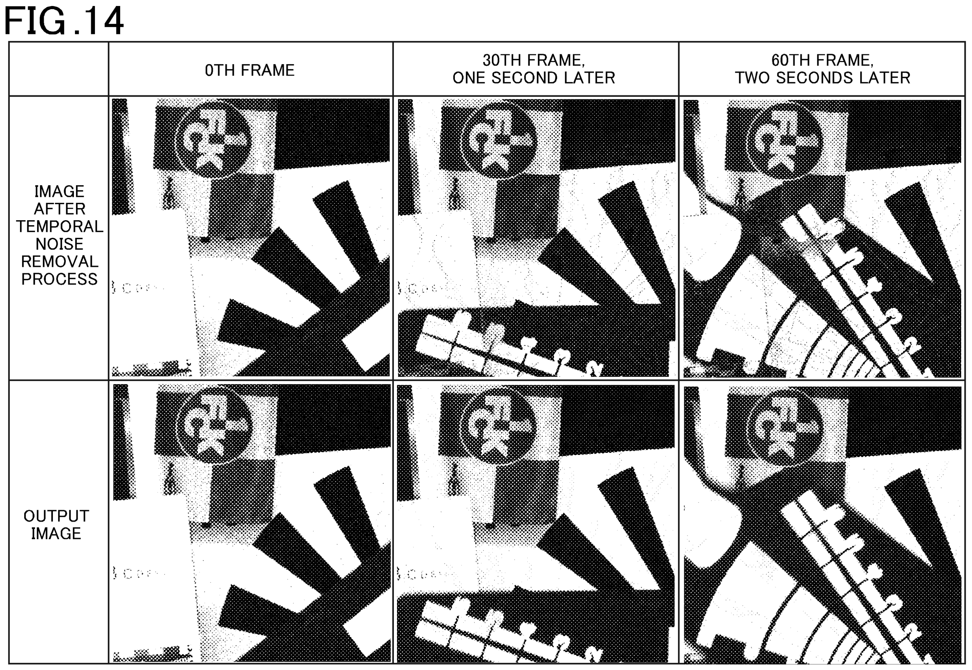

FIG. 14 illustrates images after the temporal noise removal process is performed on time-series image data with motion, and output images that are finally output.

As shown in FIG. 12 and FIG. 14, in the output image, the temporal noise is removed while the occurrence of an afterimage is avoided by the image processing.

As described above, according to the present embodiment, the output value determination section 29 of the image processing apparatus 20 calculates the absolute value of the difference between the pixel value of the image after the temporal noise removal process and the pixel value of the image after the spatial noise removal process for each pixel of the target frame. When the absolute value of the difference is equal to or less than a predetermined value, the output value determination section 29 outputs the pixel value of the image after the temporal noise removal process. On the other hand, when the absolute value of the difference is greater than the predetermined value, the output value determination section 29 outputs the pixel value of the target frame. That is, for a pixel for which the absolute value of the difference is greater than a predetermined value, the output value determination section 29 determines that an afterimage will occur by the temporal noise removal process and adopts the input pixel value. Therefore, the image processing apparatus 20 can improve image quality while avoiding side effects due to the removal of temporal noise. The image processing apparatus 20 can perform high-performance correction with a simple configuration.

Further, as shown in Expression (2), in the temporal noise removal process of the target frame, the temporal noise removal section 27 uses the image after the temporal noise removal process that is generated for the frame immediately before the target frame. Thus, the temporal noise removal section 27 can output an image corresponding to the average of multiple frames in the past.

Further, as shown in Expression (3), for each pixel of the target frame, the spatial noise removal section 28 can obtain an average of the pixel and its surrounding pixels. Thus, the spatial noise removal section 28 can smooth the pixel values in the same frame and remove noise.

Further, with respect to the density values representing the density of the image, it is possible to improve the image quality while avoiding side effects caused by removal of temporal noise.

[Modification example 1]

Next, a modification example 1 will be described focusing on differences from the above-described embodiment.

The image processing system 100 according to modification example 1 uses the method of the temporal noise removal process different from the method in the above-described embodiment. In the image processing (refer to FIG. 2) executed by the image processing apparatus 20, processing except for the temporal noise removal process is the same as that in the above-described embodiment.

The temporal noise removal section 27 of the image processing apparatus 20 performs the temporal noise removal process for each of the multiple frames constituting a time-series image. The temporal noise removal process is a process of averaging the target frame and a predetermined number of frames preceding the target frame. The temporal noise removal section 27 may obtain an average with different weighting for each frame (weighted average).

In the modification example 1, both the input pixel values and the output pixel values in the image processing have the 12-bit length (0 to 4095).

The temporal noise removal section 27 performs the following process for each pixel in the image.

An input pixel value of the current frame (target frame) is defined as $I_n$.

An output pixel value of the current frame after the temporal noise removal process is defined as $T_n$. An output pixel value of the frame immediately before the current frame after the temporal noise removal process is defined as $T_{n-1}$. The temporal noise removal section 27 retains the output pixel value $T_{n-1}$ of the frame immediately before the current frame after the temporal noise removal process on the memory.

As in Expression (6), "diff3" is a value obtained by shifting the absolute difference between the input pixel value $I_n$ of the current frame and the output pixel value $T_{n-1}$ of the frame immediately before the current frame after the temporal noise removal process to the right by 4 bits. The value of "diff3" can be in the range of 0 to 255.

[Expression 6]

$$\text{diff3} = \text{abs}\left(I_n - T_{n-1}\right) \gg 4 \quad \cdots \text{EXPRESSION (6)}$$

The bit shift is a process for changing the range (width) that "diff3" can take. Even after the bit shift, "diff3" still indicates the magnitude of the absolute difference between the input pixel value $I_n$ of the current frame and the output pixel value $T_{n-1}$ of the immediately previous frame after the temporal noise removal process.

The output pixel value $T_n$ of the current frame after the temporal noise removal process is obtained by the expression (7) according to whether or not diff3 is less than or equal to the threshold th3. For example, th3 is set to 140.

[Expression 7]

$$T_n = \left(\sum_{i=0}^{39} I_{n-i}\right)/40 \qquad \text{if} \quad \text{diff3} \leqq \text{th3}$$
$$\cdots \text{EXPRESSION (7)}$$
$$T_n = I_n \qquad\qquad\qquad \text{if} \quad \text{diff3} > \text{th3}$$

If diff3 is less than or equal to threshold th3, the temporal noise removal section 27 outputs the average value of the pixel values in the past 40 frames. The number of frames used for averaging is not limited to 40 but can be changed appropriately.

If diff3 is greater than the threshold th3, the temporal noise removal section 27 outputs the input pixel value $I_n$ as it is.

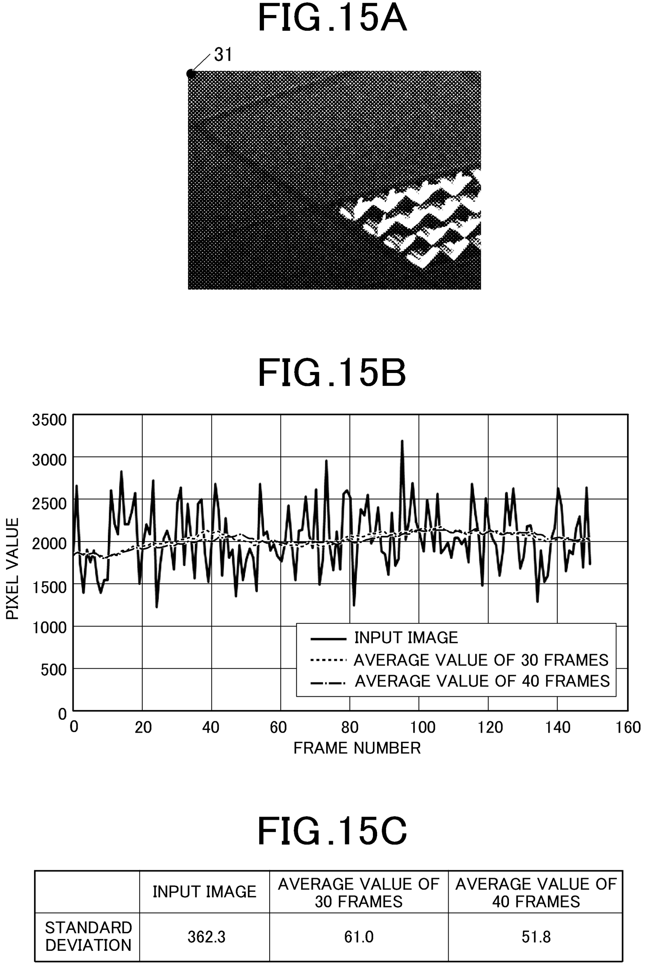

The upper left pixel is determined to be a target pixel 31 in each frame image of the time-series image data without motion, as shown in FIG. 15A.

FIG. 15B shows, for the target pixel 31, temporal changes of the input pixel value $I_n$, the average value of the past 30 frames, and the average value of the past 40 frames. In FIG. 15B, the horizontal axis represents the frame number and the vertical axis represents the pixel value.

FIG. 15C shows the standard deviation of the input pixel value $I_n$, the standard deviation of the average value of the past 30 frames, and the standard deviation of the average value of the past 40 frames for the 50th to 149th frames shown in FIG. 15B. The standard deviation of the output pixel values averaged in the past 40 frames by the temporal noise removal process is "51.8". This is close to the standard deviation "54.3" of the output pixel value after the temporal noise removal process in the embodiment (see FIG. 5C).

According to the modification example 1, the temporal noise removal section 27 calculates the average of the target frame and a predetermined number of frames obtained earlier than the target frame. Thus, the temporal noise removal section 27 can smooth pixel values in the time direction and remove the temporal noise by simple calculations.

[Modification example 2]

Next, a modification example 2 will be described focusing on differences from the above-described embodiment.

The image processing system 100 in the modification example 2 uses the temporal noise removal process method different from that of the above-described embodiment. In the image processing (see FIG. 2) executed by the image processing apparatus 20, processing except for the temporal noise removal process is the same as that in the above-described embodiment.

Also in the modification example 2, both the input pixel values and the output pixel values in the image processing have the 12-bit length (0 to 4095).

The modification example 2 uses the same Expressions (1) and (2) to calculate the output pixel value $T_n$ of the current frame after the temporal noise removal process as in the above-described embodiment.

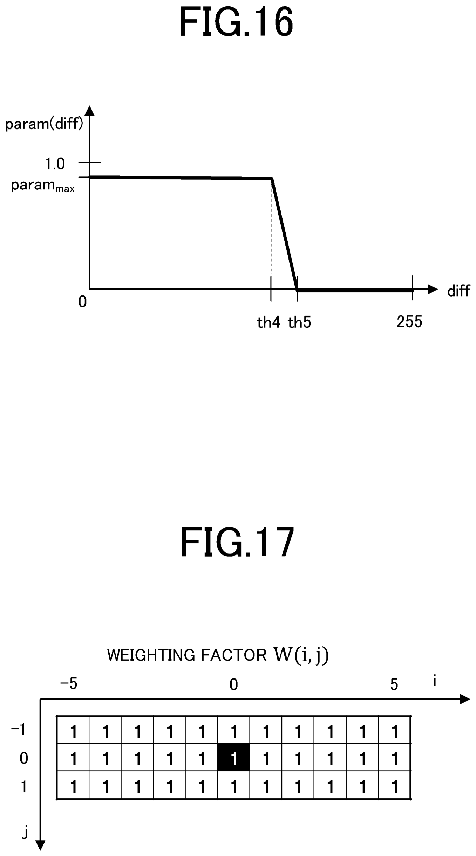

In the modification example 2, a function param (diff) shown in FIG. 16 is used instead of the function param (diff) shown in FIG. 3.

The param (diff) shown in FIG. 16 is $param_{max}$ when diff is less than the threshold th4, and the param (diff) is zero when diff is greater than the threshold th5. When diff is greater than the threshold th4 and less than or equal to the threshold th5, param (diff) has a value on a straight line connecting the point (th4, $param_{max}$) and the point (th5, 0) shown in FIG. 16. For example, they are set as follows: th4 = 130, th5 = 150, and $param_{max}$ = 0.95.

According to the modification example 2, the temporal noise removal level changes smoothly by providing two kinds of thresholds th4 and th5 in param (diff) used for the temporal noise removal process.

[Modification example 3]

Next, the modification example 3 will be described focusing on differences from the above-described embodiment.

The image processing system 100 according to the modification example 3 uses the spatial noise removal process method different from the method in the above-described embodiment. In the image processing (see FIG. 2) executed by the image processing apparatus 20, the processing other than the spatial noise removal process is the same as that in the above-described embodiment.

The spatial noise removal section 28 of the image processing apparatus 20 is constituted by a hardware circuit, such as an FPGA. The spatial noise removal section 28 includes a line memory that stores pixel values of a predetermined number of lines of the target frame. Herein, the direction of a line in an image is defined as a lateral direction.

In the spatial noise removal process, the spatial noise removal section 28 calculates, for each pixel in the target frame, an average of the pixel and its surrounding pixels.

The range of surrounding pixels in a direction parallel to the line (lateral direction) is wider than the range of surrounding pixels in a direction perpendicular to the line (longitudinal direction). That is, in the spatial filter, the number of pixels in the lateral direction is greater than the number of pixels in the longitudinal direction.

FIG. 17 shows an example of a spatial filter (11 × 3) used for the spatial noise removal process in the modification example 3. In the modification example 3, a laterally long spatial filter is used.

A weighting factor at each position in the filter is denoted by W (i, j).

An input pixel value at a pixel position (x, y) in the current frame (target frame) is defined as $I_n$ (x, y).

An output pixel value $S_n$ (x, y) after the spatial noise removal process at a pixel position (x, y) is obtained by Expression (8). Herein, 33 pixel values (11 × 3) are averaged.

[Expression 8]

$$S_n(x, y) = \left\{ \sum_{i=-5}^{5} \sum_{j=-1}^{1} W(i, j)\, I_n(x + i, y + j) \right\} / 33 \qquad \cdots \text{EXPRESSION (8)}$$

According to the modification example 3, the spatial filter used for the spatial noise removal process has more pixels in the lateral direction than pixels in the longitudinal direction. Thus, when an FPGA or the like constitutes the spatial noise removal section 28, the number of lines for which the line memory retains data can be reduced. Thus, the capacity of the line memory can be reduced.

Although the spatial filter of 11 × 3 (33 pixels) is used in the modification example 3, a spatial filter having a size close to 7 × 7 (49 pixels) shown in FIG. 7 may be used. For example, the spatial filter may be 15 × 3 (45 pixel) or the like.

[Modification example 4]

Next, a modification example 4 will be described focusing on the differences from the above-described embodiment.

In the image processing system 100 according to the modification example 4, each frame image constituting a time-series image is a Bayer image. Further, the image processing system 100 of the modification example 4 uses the spatial noise removal process method different from that in the above-described embodiment. In the image processing (see FIG. 2) executed by the image processing apparatus 20, the processing other than the spatial noise removal process is the same as that in the above-described embodiment.

The spatial noise removal section 28 of the image processing apparatus 20 performs the spatial noise removal process on each of the multiple frames constituting a time-series image. In the spatial noise removal process, for each pixel of a target frame that is a Bayer image, the pixel and surrounding pixels having the same color as the pixel are averaged.

In order for the imaging element 13 to obtain a color image, a filter 12 of R (red), G (green), or B (blue) is arranged for each pixel. The Bayer image is an image in which luminance values output by the respective imaging elements 13 (sensors) are kept unchanged. That is, each pixel in the Bayer image has only information on one of R, G, and B.

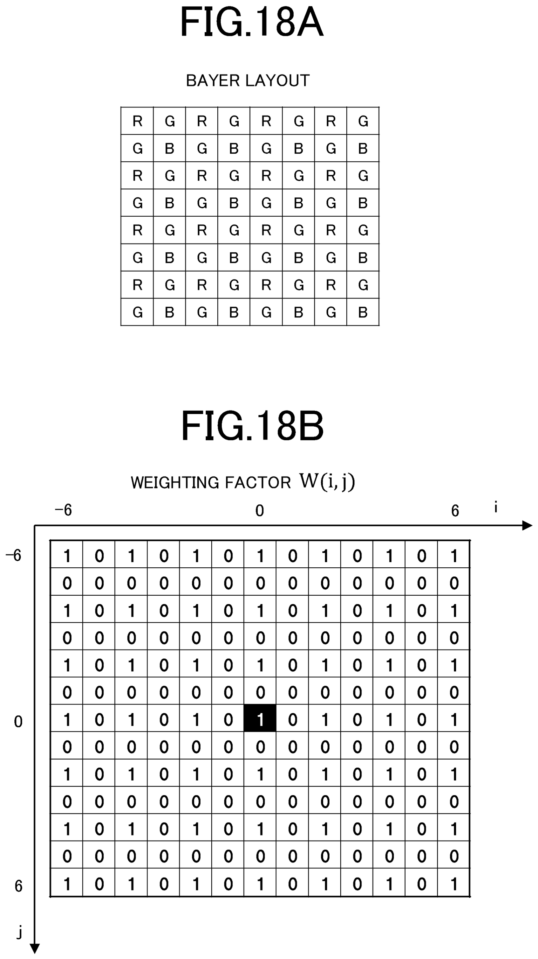

An example of the Bayer layout is illustrated in FIG. 18A.

An example of a spatial filter for the Bayer image is illustrated in FIG. 18B. A weighting factor at each position in the filter is denoted by W (i, j).

An input pixel value at a pixel position (x, y) in the current frame (target frame) is defined as $I_n(x, y)$.

An output pixel value $S_n(x, y)$ after the spatial noise removal process at a pixel position (x, y) is obtained by Expression (9).

[Expression 9]

$$S_n(x, y) = \left\{ \sum_{i=-6}^{6} \sum_{j=-6}^{6} W(i, j)\, I_n(x + i, y + j) \right\} / 49 \qquad \cdots \text{EXPRESSION (9)}$$

In the Bayer image, pixel values of the same color (R, G, or B) appear at a cycle of every two pixels in both the vertical direction and the horizontal direction. Therefore, the spatial filter illustrated in FIG. 18B can extract only information on the same color to remove spatial noise.

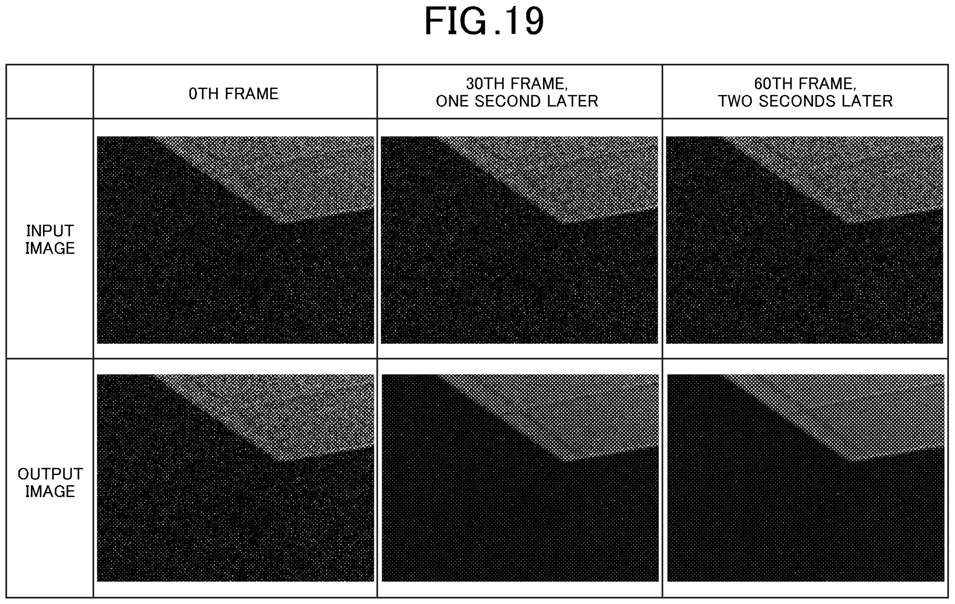

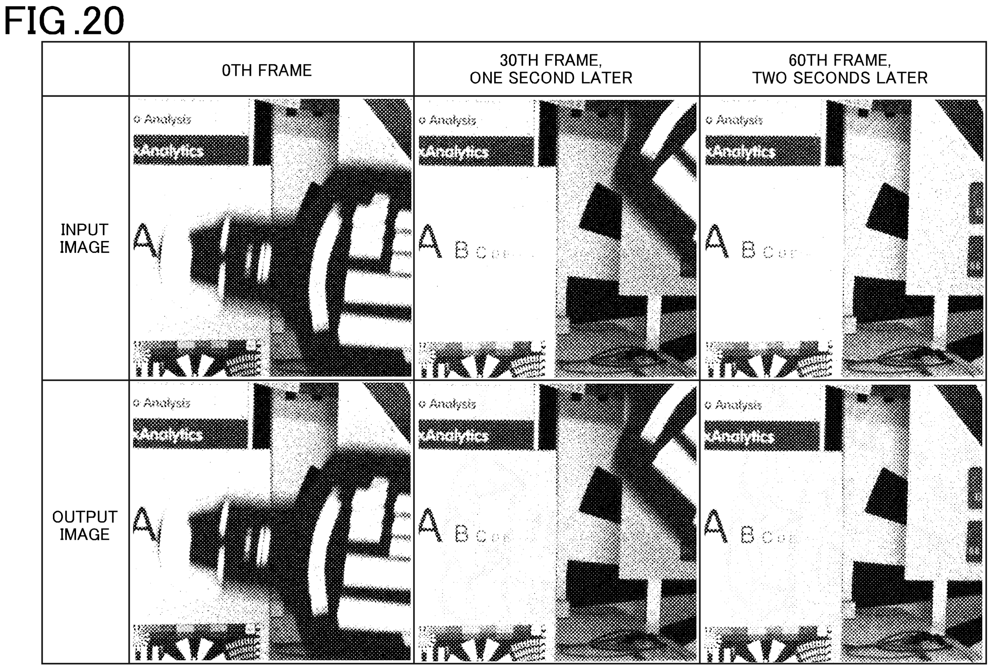

FIG. 19 and FIG. 20 illustrate an example in which input images and output images corresponding to the respective input images are displayed as Bayer images. The output images are images that are finally output as a result of performing image processing on the input images. In the state of the Bayer image, pixel values corresponding to different colors (R, G, and B) are displayed for the respective pixels. FIG. 19 is an example when time-series image data without motion is a target. FIG. 20 is an example when time-series image data with motion is a target.

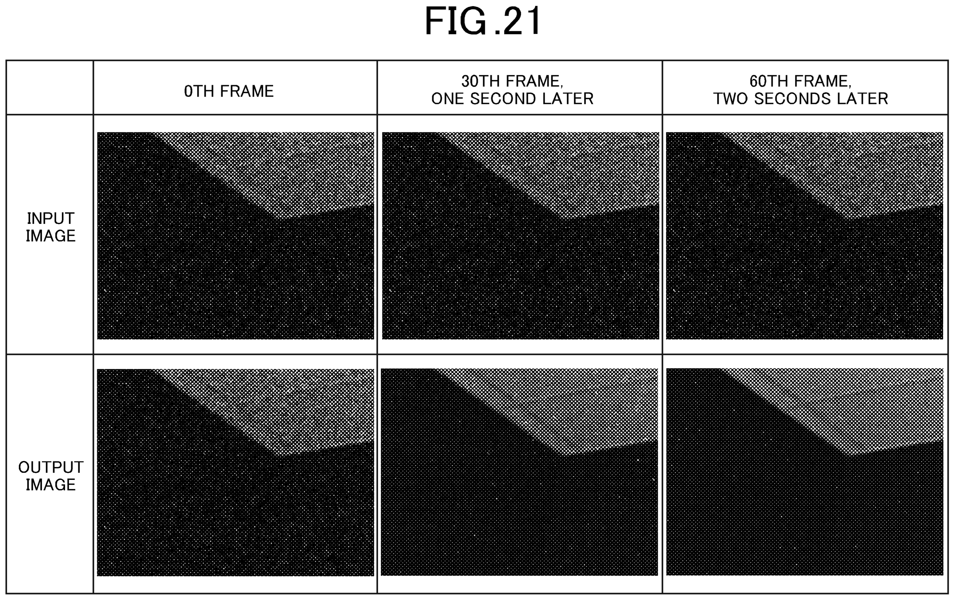

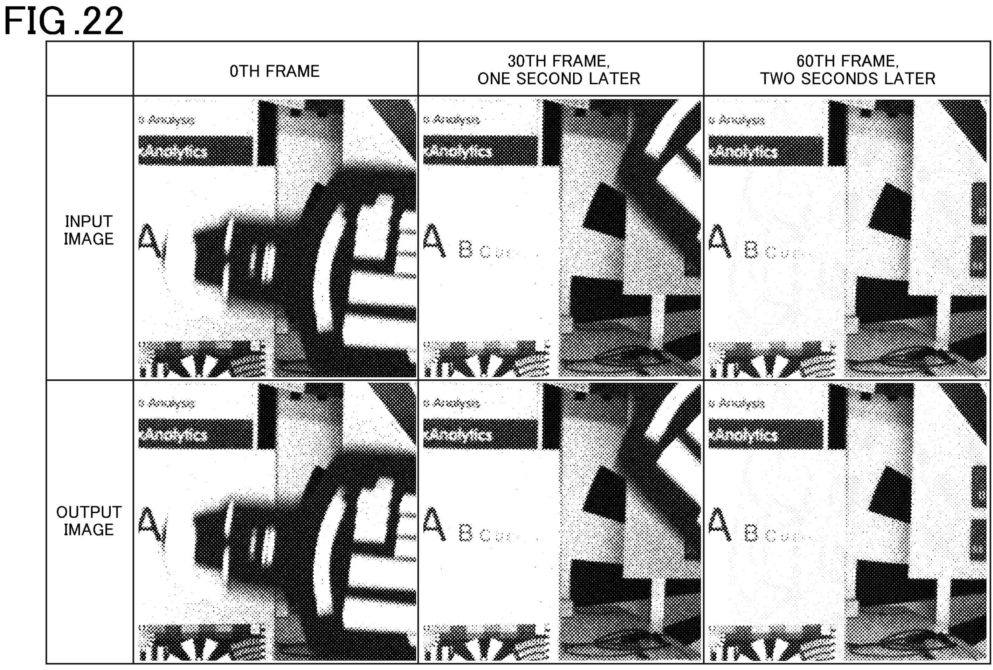

FIG. 21 and FIG. 22 are images obtained by colorizing the input images and the output images illustrated in FIG. 19 and FIG. 20, respectively. Colorizing is to express each pixel by a combination of RGB by interpolating a color that does not exist in the pixel from neighboring pixels (demosaicing). Although a false color may occur by the colorization of the Bayer image, the false color can be suppressed by image processing. Also in FIG. 22, pixels having motions are output without being subjected to the temporal noise removal process. Therefore, side effects due to removal of temporal noise can be avoided.

Note that the figures are monochrome because they cannot express colors.

According to the modification example 4, for each pixel in the Bayer image, the spatial noise removal section 28 averages the pixel and its surrounding pixels having the same color as the pixel in the spatial noise removal process. Since the spatial noise removal section 28 obtains an average in the same color (R, G, or B), the spatial noise removal section 28 can remove spatial noise for each color of R, G, and B.

[Modification example 5]

Next, the modification example 5 will be described, focusing on differences from the above-described embodiment.

In the above-described embodiment and modification examples 1 to 4, pixel values corresponds to density values. On the other hand, in the image processing system 100 of the modification example 5, pixel values of a time-series image are numeric values representing distances. In the modification example 5, the pixel value of each pixel in the image data to be processed by the image processing apparatus 20 indicates the distance to the object.

It is assumed that the camera 10 is a twin-lens stereo camera. In this case, the controller 21 of the image processing apparatus 20 calculates parallax with respect to an object in two images captured by the two cameras and calculates the distance between the camera 10 and the object. For example, the controller 21 calculates parallax and distance values using the method described in Japanese Unexamined Patent Publication No. 2012-109788.

Instead of the controller 21 of the image processing apparatus 20, the signal processing section 14 of the camera 10 may calculate the distance between the camera 10 and the object.

Alternatively, the controller 21 of the image processing apparatus 20 may obtain an image having distance values as pixel values obtained by laser scanning.

Processing after obtaining an image that has distance values as pixel values is the same as in the image processing of the above embodiment (refer to FIG. 2).

According to the modification example 5, it is possible to improve the image quality while avoiding side effects due to removal of temporal noise for an image having distance values as pixel values.

The embodiment and modification examples described above are examples of the image processing apparatus, the image processing method, and the program according to the present invention. The present invention is not limited to these examples. The detailed configuration and detailed operation of each section constituting the apparatus can be changed appropriately without departing from the scope of the present invention.

For example, processes characteristic in the embodiment and modification examples may be combined.

Further, pixel values of a time-series image are not limited to density values or distance values but may be values having a different meaning.

Further, when the temporal noise removal section 27 generates an image after the temporal noise removal process of the target frame, the temporal noise removal section 27 may use a frame obtained after the target frame in addition to the target frame and a frame obtained before the target frame.

The computer-readable medium storing the program for executing each process is not limited to the above-described example. A portable recording medium, such as a CD-ROM, is also applicable. Further, a carrier wave may be applied as a medium for providing program data via a communication line.

Industrial Applicability

The image processing apparatus, the image processing method, and the program according to the present invention can be used in the technical field of image processing for moving images.

Reference Signs List

    10 Camera
    11 Lens
    12 Filter
    13 Imaging element
    14 Signal processing section
    20 Image processing apparatus
    21 Controller
    22 Operation section
    23 Display section
    24 Communication section
    25 Storage

26 Image processing section
27 Temporal noise removal section
28 Spatial noise removal section
29 Output value determination section
100 Image processing system

**Claims**

1. An image processing apparatus that performs processing on each of frames constituting a time-series image as a target frame, the apparatus comprising:

   a first processor that performs a temporal noise removal process on each pixel, based on the target frame and a past frame obtained earlier than the target frame to generate a first processed image of the target frame;
   a second processor that performs a spatial noise removal process on the target frame to generate a second processed image of the target frame; and
   an output value determination section, wherein:
   for each pixel of the target frame, when an absolute value of a difference between a pixel value of the first processed image and a pixel value of the second processed image is less than or equal to a predetermined value, the output value determination section outputs the pixel value of the first processed image, and when the absolute value of the difference is greater than the predetermined value, the output value determination section outputs a pixel value of the target frame.

2. The image processing apparatus according to claim 1, wherein in the temporal noise removal process of the target frame, the first processor uses the first processed image generated for a frame immediately before the target frame.

3. The image processing apparatus according to claim 1, wherein the first processor calculates an average of the target frame and a predetermined number of past frames obtained earlier than the target frame.

4. The image processing apparatus according to claim 1, wherein, for each pixel of the target frame, the second processor calculates an average of the pixel and surrounding pixels of the pixel.

5. The image processing apparatus according to claim 4, wherein:

   the second processor includes a line memory that stores pixel values of a predetermined number of lines in the target frame, and
   a range of the surrounding pixels in a direction parallel to the line is greater than a range of the surrounding pixels in a direction perpendicular to the line.

6. The image processing apparatus according to claim 1, wherein:

   the time-series image is a Bayer image, and
   for each pixel of the target frame, the second processor calculates an average of the pixel and surrounding pixels having an identical color as the pixel.

7. The image processing apparatus according to any one of claims 1 to 6, wherein pixel values of the time-series image are density values indicating image density.

8. The image processing apparatus according to any one of claims 1 to 6, wherein pixel values of the time-series image are numerical values indicating distances.

9. An image processing method for performing processing on each of frames constituting a time-series image as a target frame, the method comprising:

   a first processing step of performing a temporal noise removal process on each pixel, based on the target frame and a past frame obtained earlier than the target frame to generate a first processed image of the target frame;
   a second processing step of performing a spatial noise removal process on the target frame to generate a second processed image of the target frame; and

an output value determination step, wherein:

in the output value determination step, for each pixel of the target frame, when an absolute value of a difference between a pixel value of the first processed image and a pixel value of the second processed image is less than or equal to a predetermined value, the pixel value of the first processed image is output, and when the absolute value of the difference is greater than the predetermined value, a pixel value of the target frame is output.

10. A program for a computer of an image processing apparatus that performs processing on each of frames constituting a time-series image as a target frame, the program causing the computer to function as:

a first processor that performs a temporal noise removal process on each pixel, based on the target frame and a past frame obtained earlier than the target frame to generate a first processed image of the target frame;

a second processor that performs a spatial noise removal process on the target frame to generate a second processed image of the target frame; and

an output value determination section, wherein:

for each pixel of the target frame, when an absolute value of a difference between a pixel value of the first processed image and a pixel value of the second processed image is less than or equal to a predetermined value, the output value determination section outputs the pixel value of the first processed image, and when the absolute value of the difference is greater than the predetermined value, the output value determination section outputs a pixel value of the target frame.

# FIG.1

# FIG.2

# FIG.3

# FIG.4

| | 0TH FRAME | 30TH FRAME, ONE SECOND LATER | 60TH FRAME, TWO SECONDS LATER |
|---|---|---|---|
| INPUT IMAGE | | | |
| IMAGE AFTER TEMPORAL NOISE REMOVAL PROCESS | | | |

EP 4 697 696 A1

# FIG.5A

31

# FIG.5B

FRAME NUMBER

- ——— INPUT VALUE
- ········· AFTER TEMPORAL NOISE REMOVAL PROCESS

# FIG.5C

| | INPUT VALUE | AFTER TEMPORAL NOISE REMOVAL PROCESS |
|---|---|---|
| STANDARD DEVIATION | 362.3 | 54.3 |

# FIG.6

| | 0TH FRAME | 30TH FRAME, ONE SECOND LATER | 60TH FRAME, TWO SECONDS LATER |
|---|---|---|---|
| INPUT IMAGE | | | |
| IMAGE AFTER TEMPORAL NOISE REMOVAL PROCESS | | | |

EP 4 697 696 A1

# FIG.7

WEIGHTING FACTOR $W(i, j)$

# FIG.8

| | 0TH FRAME | 30TH FRAME, ONE SECOND LATER | 60TH FRAME, TWO SECONDS LATER |
|---|---|---|---|
| INPUT IMAGE | | | |
| IMAGE AFTER SPATIAL NOISE REMOVAL PROCESS | | | |

EP 4 697 696 A1

# FIG.9A

31

# FIG.9B

PIXEL VALUE vs FRAME NUMBER

—— INPUT VALUE
······· AFTER SPATIAL NOISE REMOVAL PROCESS

# FIG.9C

| | INPUT VALUE | AFTER SPATIAL NOISE REMOVAL PROCESS |
|---|---|---|
| STANDARD DEVIATION | 362.3 | 50.7 |

FIG.10

# FIG.11

```
        ┌──────────────────────────┐
        │     OUTPUT VALUE         │
        │ DETERMINATION PROCESS    │
        └──────────────────────────┘
                    │
                    ▼                      A11
        ┌──────────────────────────┐
        │   DETERMINE PROCESSING   │
        │      TARGET PIXEL        │
        └──────────────────────────┘
                    │
                    ▼                      A12
        ┌──────────────────────────┐
        │ CALCULATE ABSOLUTE VALUE OF │
        │ DIFFERENCE BETWEEN IMAGE │
        │   AFTER TEMPORAL NOISE   │
        │   REMOVAL PROCESS AND    │
        │  IMAGE AFTER SPATIAL NOISE │
        │     REMOVAL PROCESS      │
        └──────────────────────────┘
                    │
                    ▼        A13
            ╱─────────────────╲
           ╱        IS         ╲      NO
          ╱  ABSOLUTE VALUE OF  ╲──────────┐
          ╲ DIFFERENCE LESS THAN OR ╱      │
           ╲ EQUAL TO THRESHOLD? ╱         │
            ╲─────────────────╱            │
                    │ YES                  │
                    ▼       A14            ▼        A15
        ┌──────────────────────┐   ┌──────────────┐
        │ OUTPUT PIXEL VALUE OF IMAGE │   │   OUTPUT     │
        │  AFTER TEMPORAL NOISE  │   │ PIXEL VALUE OF │
        │    REMOVAL PROCESS     │   │ TARGET FRAME │
        └──────────────────────┘   └──────────────┘
                    │                      │
                    ▼◄─────────────────────┘
            ╱─────────────────╲   A16
     NO    ╱     DONE FOR      ╲
    ◄──────╲ ALL PIXELS IN TARGET ╱
           ╲      FRAME?      ╱
            ╲─────────────────╱
                    │ YES
                    ▼
             ┌──────────────┐
             │    RETURN     │
             └──────────────┘
```

# FIG.12

| | 0TH FRAME | 30TH FRAME, ONE SECOND LATER | 60TH FRAME, TWO SECONDS LATER |
|---|---|---|---|
| IMAGE AFTER TEMPORAL NOISE REMOVAL PROCESS | | | |
| OUTPUT IMAGE | | | |

EP 4 697 696 A1

# FIG.13A

# FIG.13B

# FIG.13C

|  | INPUT IMAGE | OUTPUT IMAGE |
|---|---|---|
| STANDARD DEVIATION | 362.3 | 54.3 |

FIG.14

# FIG.15A

31

# FIG.15B

# FIG.15C

| | INPUT IMAGE | AVERAGE VALUE OF 30 FRAMES | AVERAGE VALUE OF 40 FRAMES |
|---|---|---|---|
| STANDARD DEVIATION | 362.3 | 61.0 | 51.8 |

# FIG.16

# FIG.17

WEIGHTING FACTOR $W(i, j)$

# FIG.18A

BAYER LAYOUT

| R | G | R | G | R | G | R | G |
|---|---|---|---|---|---|---|---|
| G | B | G | B | G | B | G | B |
| R | G | R | G | R | G | R | G |
| G | B | G | B | G | B | G | B |
| R | G | R | G | R | G | R | G |
| G | B | G | B | G | B | G | B |
| R | G | R | G | R | G | R | G |
| G | B | G | B | G | B | G | B |

# FIG.18B

WEIGHTING FACTOR $W(i, j)$

FIG.19

# FIG .20

| | 0TH FRAME | 30TH FRAME, ONE SECOND LATER | 60TH FRAME, TWO SECONDS LATER |
|---|---|---|---|
| INPUT IMAGE | | | |
| OUTPUT IMAGE | | | |

EP 4 697 696 A1

# FIG.21

| | 0TH FRAME | 30TH FRAME,<br>ONE SECOND LATER | 60TH FRAME,<br>TWO SECONDS LATER |
|---|---|---|---|
| INPUT<br>IMAGE | | | |
| OUTPUT<br>IMAGE | | | |

EP 4 697 696 A1

# FIG .22

| | 0TH FRAME | 30TH FRAME,<br>ONE SECOND LATER | 60TH FRAME,<br>TWO SECONDS LATER |
|---|---|---|---|
| INPUT IMAGE | | | |
| OUTPUT IMAGE | | | |

EP 4 697 696 A1

## INTERNATIONAL SEARCH REPORT

| International application No. |
| --- |
| **PCT/JP2024/004990** |

| A. | CLASSIFICATION OF SUBJECT MATTER |
| --- | --- |

*H04N 5/21*(2006.01)i; *G06T 5/70*(2024.01)i; *H04N 23/60*(2023.01)i
FI:   H04N5/21; G06T5/70; H04N23/60 500

According to International Patent Classification (IPC) or to both national classification and IPC

| B. | FIELDS SEARCHED |
| --- | --- |

Minimum documentation searched (classification system followed by classification symbols)

H04N5/21; G06T5/70; H04N23/60

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2010/073488 A1 (PANASONIC CORPORATION) 01 July 2010 (2010-07-01) paragraphs [0015], [0031], fig. 1, 5, 8-9 | 1-10 |
| A | JP 2005-229491 A (MATSUSHITA ELECTRIC INDUSTRIAL CO., LTD.) 25 August 2005 (2005-08-25) paragraphs [0079]-[0081], fig. 13-14 | 1-10 |
| A | JP 9-312788 A (NIPPON HOSO KYOKAI) 02 December 1997 (1997-12-02) paragraphs [0021]-[0025], fig. 1 | 1-10 |
| A | US 2018/0061015 A1 (INSTITUTE OF AUTOMATION CHINESE ACADEMY OF SCIENCES) 01 March 2018 (2018-03-01) paragraph [0049], fig. 3-4, 7 | 1-10 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **12 April 2024** | **23 April 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

INTERNATIONAL SEARCH REPORT
Information on patent family members

International application No.

**PCT/JP2024/004990**

| Patent document cited in search report | | | Publication date (day/month/year) | Patent family member(s) | | | Publication date (day/month/year) |
|---|---|---|---|---|---|---|---|
| WO | 2010/073488 | A1 | 01 July 2010 | US 2011/0235941 A1 paragraphs [0024]-[0025], [0043], fig. 1, 5, 8-9 CN 102150421 A | | | |
| JP | 2005-229491 | A | 25 August 2005 | (Family: none) | | | |
| JP | 9-312788 | A | 02 December 1997 | (Family: none) | | | |
| US | 2018/0061015 | A1 | 01 March 2018 | WO 2016/165116 A1 | | | |

Form PCT/ISA/210 (patent family annex) (July 2022)

**EP 4 697 696 A1**

**Patent documents cited in the description**

- JP 2014158083 A
- JP 2012109788 A